(19) **Europäisches Patentamt / European Patent Office / Office européen des brevets**

(11) **EP 3 330 399 B1**

(12) **EUROPEAN PATENT SPECIFICATION**

(45) Date of publication and mention of the grant of the patent:
**25.03.2020 Bulletin 2020/13**

(21) Application number: **16830562.1**

(22) Date of filing: **27.07.2016**

(51) Int Cl.:
*C22C 38/00* (2006.01)  *C21D 8/06* (2006.01)
*C22C 38/18* (2006.01)  *C22C 38/54* (2006.01)
*B21B 1/16* (2006.01)  *F16F 1/02* (2006.01)
*C21D 6/00* (2006.01)  *C22C 38/04* (2006.01)
*C22C 38/06* (2006.01)  *C22C 38/20* (2006.01)
*C22C 38/22* (2006.01)  *C22C 38/24* (2006.01)
*C22C 38/26* (2006.01)  *C22C 38/28* (2006.01)
*C22C 38/32* (2006.01)  *C22C 38/42* (2006.01)
*C22C 38/46* (2006.01)  *C22C 38/50* (2006.01)
*C22C 38/44* (2006.01)  *C22C 38/02* (2006.01)
*C21D 9/02* (2006.01)

(86) International application number:
**PCT/JP2016/072051**

(87) International publication number:
**WO 2017/018457 (02.02.2017 Gazette 2017/05)**

(54) **STEEL FOR SUSPENSION SPRING AND METHOD FOR MANUFACTURING SAME**

STAHLDRAHT FÜR TRAGFEDER UND VERFAHREN ZUR HERSTELLUNG DAVON

ACIER POUR RESSORT DE SUSPENSION ET SON PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.07.2015 JP 2015147697**

(43) Date of publication of application:
**06.06.2018 Bulletin 2018/23**

(73) Proprietors:
• **Nippon Steel Corporation**
  **Tokyo (JP)**
• **NETUREN CO., LTD.**
  **Tokyo 141-8639 (JP)**

(72) Inventors:
• **SUZUKI, Takahisa**
  **Tokyo 100-8071 (JP)**
• **CHIBA, Keisuke**
  **Tokyo 100-8071 (JP)**
• **MIYAMOTO, Hirotsugu**
  **Tokyo 100-8071 (JP)**

• **IWANAGA, Kengo**
  **Tokyo 141-8639 (JP)**
• **OKAMURA, Tsukasa**
  **Tokyo 141-8639 (JP)**
• **FUJIWARA, Fumiaki**
  **Tokyo 141-8639 (JP)**
• **EBANA, Yukio**
  **Tokyo 141-8639 (JP)**

(74) Representative: **Vossius & Partner**
**Patentanwälte Rechtsanwälte mbB**
**Siebertstrasse 3**
**81675 München (DE)**

(56) References cited:
| EP-A1- 1 712 653 | CN-A- 104 313 472 |
| JP-A- 2002 097 551 | JP-A- 2002 097 551 |
| JP-A- 2005 220 422 | JP-A- 2005 220 422 |
| JP-A- 2009 256 771 | JP-A- 2009 256 771 |
| JP-A- 2011 011 245 | JP-A- 2011 011 245 |
| JP-A- 2014 043 612 | JP-A- 2014 043 612 |
| JP-A- 2014 122 393 | JP-B2- 5 653 020 |

**Description**

[TECHNICAL FIELD]

The present disclosure relates to spring steel used for suspension springs for automobiles etc., preferably high strength spring steel for suspension springs having a 1800 MPa or more tensile strength, and a method for producing the same.

[BACKGROUND ART]

A spring is usually manufactured by the cold spring making method of which drawing a hot rolled wire rod to a predetermined wire size, quench hardening it, tempering it, then shaping it in cold, or the method of which shaping a drawn wire rod while hot, quench hardening it, and tempering it. In recent years, high strength springs with a tensile strength of 1800 MPa or more are being developed in order to deal with environmental problems, further lightening of weight and lowering of fuel consumption have been sought from automobiles.

The cold spring making method has a high degree of freedom of design of spring shape and is also high in precision, so is a work method particularly suitable for high strength springs. With this work method, the material, that is, the spring steel, is required to have both strength and cold formability. An indicator of the formability is "reduction of area in tensile test", that is, the rate of reduction of a cross-section at a location of break at the time of a tensile test. A wire rod for spring use adjusted in relationship of amount of C and center segregation to raise the cold formability has been proposed (PLT 1). Further, the method of quenching a hot worked wire rod as is and tempering it to refine the microstructure and improve the strength and fatigue characteristic has also been proposed (PLT 2).

Further, in general, if making a spring high in strength, the sensitivity to hydrogen penetrating into the steel in a corrosive environment and the sensitivity to corrosion pits and other defects rise and the spring is liable to break due to delayed fracture. The delay fracture resistance is evaluated by the critical hydrogen content where the test piece does not break even if a certain load is applied (critical hydrogen content). To improve the delayed fracture resistance, it is effective to add alloy elements such as Ni or Cu for improving the corrosion resistance, V or Mo for forming precipitates serving as sites for trapping hydrogen, etc. (PLT 3).

However, if adding alloy elements, the cost rises, so spring steel obtained by stretching the prior austenite grains at the surface in the rolling direction to increase the critical hydrogen content and improve the delayed fracture resistance and hydrogen fatigue resistance is proposed (PLT 4). Spring steel combining stretching of the prior austenite grains at the surface and refining the prior austenite grains at the inside so as to improve the delayed fracture resistance (PLT 5) is also proposed. A spring steel wire formed by hardening and tempering a steel wire containing carbon, silicon, manganese and chromium having tempering martensitic structure (PLT 6) is also known.

[CITATION LIST]

[PATENT LITERATURE]

PLT 1. Japanese Patent Publication No. 09-310151A
PLT 2. Japanese Patent Publication No. 06-346146A
PLT 3. Japanese Patent Publication No. 2002-115023A
PLT 4. Japanese Patent Publication No. 2002-097551A
PLT 5. Japanese Patent Publication No. 2014-043612A
PLT 6. Japanese Patent Publication No. 2005220422

[SUMMARY OF THE INVENTION]

[PROBLEMS TO BE SOLVED BY THE INVENTION]

However, the arts described in PLTs 1 and 2 are effective for improvement of the cold formability, but there is the problem that they do not contribute to the improvement of the delayed fracture resistance. Further, the arts described in PLT 3, PLT 4, and PLT 5 are effective for improving the delayed fracture resistance, but the cold formability is not improved, so there is the problem that making a spring by further raising the strength of the spring steel will become difficult in the future. Therefore, spring steel for suspension suppressing or not requiring addition of expensive alloy elements, having a 1800 MPa or more tensile strength, and excellent in delayed fracture resistance and cold formability and a method for producing the same have been desired.

[MEANS FOR SOLVING THE PROBLEMS]

The inventors discovered that the reduction of area in tensile test is improved at the same strengths by controlling the crystal orientations of the martensite structures so that <011> orientations preferentially appear and <111> orientations are suppressed with respect to the rolling direction of spring steel. Further, they obtained the finding that both delayed fracture resistance and cold formability can be realized by controlling the crystal orientations of the martensite structures in addition to stretching of the prior austenite grains. Further, they investigated the hot rolling conditions required for stably obtaining such crystal orientations and as a result succeeded in stably stretching the prior austenite grains and increasing the fraction of the <011> orientations of the martensite structures and suppressing the <111> orientations with respect to the rolling direction.

The spring steel for suspension and method for producing the same of the present disclosure were based on these findings. Their gist is as follows:

(1) Spring steel for suspension containing, by mass%:

C: 0.40 to 0.70%;
Si: 0.80 to 2.20%;
Mn: 0.05 to 1.50%;
Cr: 0.05 to 1.00%;
P: limited to 0.020% or less;
S: limited to 0.020% or less, and
a balance of Fe and unavoidable impurities, wherein
at a cross-section parallel to a rolling direction, 90% or more of the metal microstructures by area fraction is tempered martensite, and,
at a cross-section parallel to the rolling direction, in a range of 10% of diameter or thickness from the surface, a ratio of a length in a long axis direction of prior austenite grains and a length in a direction perpendicular to the long axis direction of the prior austenite grains is 1.5 or more and a ratio of <011 > fraction/<111> fraction of martensite texture as observed from the rolling direction is 3.0 or more.

(2) The spring steel for suspension according to (1), further containing, by mass%, one or more of:

Mo: 0.50% or less;
V: 0.50% or less;
Ni: 1.00% or less;
Cu: 0.50% or less; and
B: 0.0050% or less.

(3) The spring steel for suspension according to (1) or (2), further containing, by mass%, one or more of:

Al: 0.50% or less;
Ti: 0.20% or less; and
Nb: 0.10% or less.

(4) The spring steel for suspension according to any one of (1) to (3), wherein a tensile strength is 1800 MPa or more, a reduction of area in tensile test is 40% or more, and a critical hydrogen content measured by applying a test load of 30% of the tensile strength to a test piece provided with a 60° annular notch down to a depth of 10% of a rod diameter is 0.30 ppm or more.

(5) A method for producing spring steel for suspension according to any one of (1) to (4), comprising:

hot rolling a wire rod having steel components described in any one of (1) to (3) so as to give a 15% or more to less than 30% reduction of area in rolling in a less than 1150°C to 950°C or more temperature region, then give a 20% or more reduction of area in rolling in a less than 950°C to 750°C or more temperature region and a 40% or more cumulative reduction of area in rolling with the reduction of area in rolling in the less than 1150°C to 950°C or more temperature region,
quenching the hot rolled steel wire to transform 90% or more of the metal microstructure by area fraction at a cross-section parallel to the rolling direction to martensite, and
tempering the quenched steel wire,
wherein a time from an end of the hot rolling to a start of the quenching is within 3 seconds.

[EFFECT OF THE INVENTION]

According to the present disclosure, it is possible to obtain spring steel for suspension suppressing or not requiring addition of expensive alloy elements, having a large tensile strength, and excellent in cold formability and delay fracture resistance even if high strength spring steel for suspension.

[BRIEF DESCRIPTION OF THE DRAWINGS]

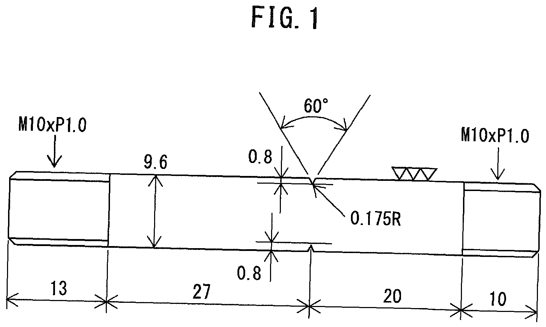

FIG. 1 is a view explaining one example of a test piece for a delayed fracture test.

[DESCRIPTION OF EMBODIMENTS]

Prior austenite metal microstructures are structures before martensite transformation due to quenching. If rapidly cooling the structures after hot working, in particular the prior austenite grains at the surface become shapes stretched in the rolling direction, the long axis direction of the prior austenite grains substantially matches the rolling direction of the spring steel, and, for example, the deviation between the long axis direction and rolling direction is 15° or less. In the case of delayed fracture, cracks form from the surface of the steel and propagate along the grain boundaries of prior austenite grains. So if the prior austenite grains at the surface layer are stretched in the rolling direction, propagation of cracks in the diametrical direction of the wire rod and thickness direction of a plate material is suppressed. The long axis direction of the prior austenite grains after rolling substantially matches the rolling direction of spring steel, while the direction perpendicular to the long axis direction substantially matches the direction perpendicular to the rolling direction, so if the ratio of the length in the long axis direction of prior austenite grains and the length in a direction perpendicular to the long axis direction (aspect ratio) of the surface layer is large, the delayed fracture resistance is improved.

On the other hand, the fact that texture has an effect on plastic deformation of steel is known in particular in steel sheet. Therefore, the inventors studied the relationship of a drawing action and texture required for improving the cold formability in the cold spring making method. As a result, as the method of improving the drawing action, they obtained the finding that it is effective to increase the fraction of <011> orientations of the martensite texture with respect to the rolling direction and suppress the <111> orientations at the martensite texture of the surface layer part of the steel. Furthermore, they obtained the finding that aspect ratio of prior austenite has no effect on strength and reduction of area in tensile test and the development of the texture inside the prior austenite grain, even if increasing the aspect ratio of the prior austenite at the surface layer part of the steel where is initiation points of delayed fracture.

At the surface layer part of the steel, it is necessary to optimize the hot rolling conditions in order to increase the aspect ratio of the prior austenite grains and simultaneously suitably control the martensite texture. That is, in the hot rolling process, if giving a reduction of area in rolling 15% to less than 30% in the 1150 to 950°C temperature region, and after that giving a reduction of area in rolling 20% or more in the 950 to 750°C temperature region and giving a cumulative reduction of area in rolling 40% or more with the rate of reduction of area in rolling in the 1150 to 950°C temperature region, then quenching the material to make 90% or more of the metal microstructure martensite, when designating the diameter or thickness of the spring steel "D", in the range of 0.1 D from the surface layer (10% of diameter or thickness from surface), the ratio of the length in a long axis direction of prior austenite grains and the length in the direction perpendicular to the long axis direction, that is, the aspect ratio, becomes 1.5 or more. Further, under the above rolling conditions, the <011> orientations of the martensite structures were increased in fraction and <111> orientations were suppressed in the rolling direction.

By doing this, it is possible to realize both the shape of prior austenite grains at the surface layer part of the spring steel and optimization of the texture at the inside of the spring steel. After that, the steel was tempered to obtain spring steel with a tensile strength of 1800 MPa or more, a reduction of area in tensile test of 40% or more, and a critical hydrogen content of 0.30 ppm or more.

The chemical components of the spring steel for suspension of the present disclosure will be explained. In the following explanation of the composition, the percent marks indicate the mass% based on the total mass of the spring steel for suspension.

(C: 0.40 to 0.70%)

C is an element required for raising the strength of spring steel for suspension by quench hardening and tempering. To secure the strength of spring steel for suspension, the amount of C has to be made 0.40% or more. The amount of C is preferably 0.45% or more, more preferably 0.48% or more. On the other hand, to secure the toughness of the spring steel for suspension, the upper limit of the amount of C must be 0.70%. The amount of C is preferably 0.65% or less, more preferably 0.60% or less.

(Si: 0.80 to 2.20%)

Si is an extremely important element which raises the tensile strength of spring steel for suspension and in particular raises the elastic limit and improves the resistance to change of the shape of the suspension spring during use, that is, sag loss. To obtain such an effect, the amount of Si is made 0.80% or more. Furthermore, the addition of Si raises the temper softening resistance, so in particular from the viewpoint of improving the tensile strength, the amount of Si is preferably 1.20% or more. On the other hand, to suppress embrittlement of the steel, the upper limit of the amount of Si is made 2.20%. From the viewpoint of improving the manufacturability in the steelmaking and rolling processes, the amount of Si is preferably 2.00% or less.

(Mn: 0.05 to 1.50%)

Mn is an element required for desulfurization of the spring steel for suspension. The amount of Mn is 0.05% or more. Further, Mn is an element effective for improvement of hardenability at quench hardening. From the viewpoint of obtaining this effect, the amount of Mn is preferably 0.20% or more. On the other hand, from the viewpoint of suppressing the segregation of components to prevent embrittlement of grain boundaries at the austenite temperature region, the upper limit of the amount of Mn must be 1.50%.

(Cr: 0.05 to 1.00%)

Cr is an element effective for raising the tensile strength of the spring steel for suspension and improving the hardenability. To obtain these effects, the amount of Cr is made 0.05% or more. Further, from the viewpoint of raising the temper softening resistance, the amount of Cr is preferably 0.15% or more. On the other hand, from the viewpoint of keeping undissolved carbides at the time of heating from remaining in the austenite temperature region and preventing unevenness of the components and formation of coarse carbides which may work as initiation points of fracture, the upper limit of the amount of Cr must be 1.00%.

(P: 0.020% or less)

P is an impurity. To suppress embrittlement of the steel, the amount of P is limited to 0.020% or less.

(S: 0.020% or less)

S is an impurity. To suppress embrittlement of the steel, the amount of S is limited to 0.020% or less.
Furthermore, for the purpose of improvement of the hardenability, rise of strength by precipitation strengthening, control of inclusions by deoxidation, etc., spring steel for suspension may if necessary have one or more of Mo, V, Ni, Cu, Al, Ti, Nb, and B added to it.

(Mo: 0.50% or less)

Mo is an element contributing to improvement of hardenability by addition in a small amount. Spring steel for suspension preferably contains 0.05% or more of Mo. Mo is an element effective for raising the strength of spring steel for suspension by precipitation strengthening of carbides. From the viewpoint of obtaining this effect, spring steel for suspension preferably contains 0.10% or more of Mo. On the other hand, if excessively adding Mo, the undissolved carbides increase and the hardenability of the steel decrease at the austenite temperature region, so the amount of Mo is preferably 0.50% or less. Mo is an expensive alloy element, so from the viewpoint of the cost, the amount of Mo is preferably 0.45% or less, more preferably 0.20% or less, still more preferably is not contained. The spring steel for suspension of the present disclosure can be given a large tensile strength and excellent delayed fracture resistance and cold formability even when Mo is not contained or is contained in a very small amount. If further including Mo, the spring steel for suspension of the present disclosure can be given better characteristics.

(V: 0.50% or less)

V is an element contributing to improvement of hardenability by addition in a small amount. Spring steel for suspension preferably contains 0.03% or more of V. V is an element effective for raising the strength of spring steel for suspension by precipitation strengthening of carbides. From the viewpoint of obtaining this effect, spring steel for suspension preferably contains 0.10% or more of V. On the other hand, if excessively adding V, the undissolved carbides increase and the hardenability of the steel decrease at the austenite temperature region, so the amount of V is preferably 0.50% or less. V is an expensive alloy element, so from the viewpoint of the cost, the amount of V is preferably 0.25% or less, more preferably 0.10% or less, still more preferably is not contained. The spring steel for suspension of the present disclosure can be given a large tensile strength and excellent delayed fracture resistance and cold formability even when V is not contained or is contained in a very small amount. If V is further contained, the spring steel for suspension of the present disclosure can be given better characteristics.

(Ni: 1.00% or less)

Ni is an element contributing to improvement of the toughness and hardenability of spring steel for suspension. Spring steel for suspension preferably contains 0.10% or more ofNi. Ni is also an element effective for improvement of corrosion resistance. From the viewpoint of obtaining this effect, spring steel for suspension more preferably contains 0.15% or more of Ni. On the other hand, the above effect is obtained by addition of a small amount of Ni. Even if excessively added, no increase in the effect can be expected, so the amount of Ni is preferably 1.00% or less. Ni is an expensive alloy element, so from the viewpoint of the cost, the amount of N is preferably 0.60% or less, more preferably 0.30% or less, still more preferably is not included. The spring steel for suspension of the present disclosure can be given a large tensile strength and excellent delayed fracture resistance and cold formability even when Ni is not contained or is contained in a very small amount. If further including Ni, the spring steel for suspension of the present disclosure can be given better characteristics.

(Cu: 0.50% or less)

Cu is an element contributing the improvement of the hardenability of spring steel for suspension. Spring steel for suspension preferably contains 0.05% or more of Cu. Cu is an element effective also for improvement of the corrosion resistance. From the viewpoint of obtaining this effect, the spring steel for suspension more preferably contains 0.10% or more of Cu. On the other hand, if excessively adding Cu, this can become a cause of rolling cracking in the austenite region, so the amount of Cu is preferably 0.50% or less, more preferably 0.30% or less.

(B: 0.0050% or less)

B is an element improving the hardenability and simultaneously cleaning the grain boundaries to improve the toughness. Spring steel for suspension preferably contains 0.0010% or more of B. However, if excessively adding B, this lowers the hot ductility of the steel and degrades the manufacturability, so the amount of B is preferably 0.0050% or less.

(Al: 0.50% or less)

Al is a deoxidizing element. To raise the cleanliness of the spring steel for suspension, the spring steel for suspension preferably contains 0.003% or more of Al. Further, Al is an element effective for suppressing coarsening of the austenite grains during heat treatment due to precipitates of AlN etc. From the viewpoint of obtaining this effect, the amount of Al is more preferably 0.020% or more. On the other hand, if the amount of Al is too large, coarse inclusions forming the initiation points of fracture are easily formed, so the amount of Al is preferably 0.50% or less. However, the spring steel for suspension of the present disclosure can be given a large tensile strength and excellent delayed fracture resistance and cold formability even if not containing Al or if containing an extremely small amount of the level of an unavoidable impurity of 0.001% or less. Even if the spring steel for suspension contains 0.001% or less of Al, at the level of an unavoidable impurity of 0.001% or less, the effect as a deoxidizing element cannot substantially be obtained. The spring steel for suspension contains the same amount of oxygen as the case where no Al is contained.

(Ti 0.20% or less)

Ti is an element effective for suppressing coarsening of the austenite grains during heat treatment due to precipitates of TiN etc. Spring steel for suspension preferably contains 0.002% or more of Ti. Furthermore, from the viewpoint of lowering the amount of solute N for the purpose of obtaining the effect of addition of B etc. the amount of Ti is more preferably 0.010% or more. However, if excessively added, it causes the steel to be embrittled, so the amount of Ti is preferably 0.20% or less.

(Nb: 0.10% or less)

Nb is an element effective for suppressing coarsening of the austenite grains during heat treatment due to precipitates of NbN etc. Spring steel for suspension preferably contains 0.002% or more of Nb. Furthermore, from the viewpoint of lowering the amount of solute N for the purpose of obtaining the effect of addition of B etc., the amount of Nb is more preferably 0.010% or more. However, if excessively added, it causes the steel to be embrittled, so the amount of Nb is preferably 0.10% or less.

Next, the metal microstructure of the spring steel for suspension of the present disclosure will be explained.

A suspension spring receives a high load and is required to return to its original shape even after deforming. To satisfy such characteristics, in a suspension spring, the main microstructure has to be made tempered martensite with a high tensile strength. Therefore, when quenching and tempering spring steel for suspension, phase fraction of tempered martensite has to be the largest phase fraction in the spring steel for suspension. The area fraction of tempered martensite is 90% or more. The balance is preferably retained austenite. The area fraction of tempered martensite is evaluated by polishing the L-cross-section of the steel to a mirror finish, then corroding it by 3% Nital (3% nitric acid-ethanol solution), observing the microstructure by an optical microscope in the three fields of the surface layer part, 1/2 position of the radius or 1/4 position of the thickness, and center part, and obtaining the average area fraction of the martensite. The "L-cross-section" means the surface when cutting the steel parallel to the rolling direction to pass through the center axis.

The tensile strength of the spring steel for suspension is preferably 1900 MPa or more, more preferably 1950 MPa or more, still more preferably 2000 MPa or more.

"Delayed fracture" is the phenomenon of a steel fracturing by a crack formed at the surface layer of the steel propagating to the inside when hydrogen penetrates the steel in the state where stress is applied. The path of propagation of cracks is the grain boundaries of prior austenite. At the L-cross-section obtained by cutting a round bar steel in the section parallel to the rolling direction, the shape of the prior austenite grains at the surface layer part, in particular the ratio of the length in the long axis direction of prior austenite grain and the length in the direction perpendicular to the long axis direction (aspect ratio=length in long axis direction/length in direction perpendicular to long axis direction), is important. By making the aspect ratio larger, it is possible to ensure the direction of propagation of cracks from the surface layer part to the inside part and the direction of stretching of the austenite grain boundaries do not match, so there is the effect that the propagation of the cracks is suppressed. On the other hand, if the aspect ratio is small, the effect of suppressing propagation of cracks becomes smaller. To improve the delayed fracture resistance, at a cross-section parallel to the rolling direction of the surface layer part of the spring steel for suspension, the ratio of the length in the long axis direction of prior austenite grain and the length in the direction perpendicular to the long axis direction, that is, the aspect ratio of the length to the width, has to be 1.5 or more. The aspect ratio is preferably 1.9 or more, more preferably 2.0 or more, still more preferably 2.1 or more, further more preferably 2.2 or more. From the viewpoint of suppressing the propagation of cracks, the larger the aspect ratio the better, but from the relationship between the amount of working and recrystallization at the time of hot rolling, the upper limit of the aspect ratio of the prior austenite grains is preferably less than 5.0. In the present application, the "aspect ratio of the prior austenite grains" means the average value of the aspect ratio.

If considering the fact that corroded parts of the surface layer part and surface scratches become initiation points of delayed fracture, to sufficiently obtain the effect of suppression of delayed fracture, the region where the aspect ratio of the prior austenite grains is 1.5 or more has to continue until a position of 10% of the diameter or thickness from the surface. Therefore, the aspect ratio of the prior austenite grains of the spring steel for suspension is measured at a position of 10% of the diameter or thickness from the surface. The aspect ratio of the prior austenite grains at this position is made 1.5 or more. The more strongly the effect of rolling is felt at the surface, the larger the aspect ratio of the prior austenite grains at the surface, so if the aspect ratio of the prior austenite grains is 1.5 or more at a position of 10% of the diameter or thickness from the surface, the aspect ratio of the prior austenite grains at the surface side from that becomes 1.5 or more. On the other hand, a steel fractures before a crack propagates to a position inside from the position of 10% of the diameter or thickness from the surface, so it is sufficient to control the aspect ratio of the prior austenite grains up to the position of 10% of the diameter or thickness from the surface.

A microstructure texture where <011> orientations gather in the rolling direction is known as a "drawing texture". If <011> orientation fraction is large in the rolling direction, the slip planes of the martensite, the {011} planes, easily become arranged in the maximum shear force direction. Motion of a slip system advantageous for reducing the cross-sectional area by the load in the rolling direction can be easily selected. For this reason, if <011> orientation fraction is large in the rolling direction, this is considered advantageous in drawing deformation accompanying the reduction in cross-section.

On the other hand, if the <111> orientation fraction is large in the rolling direction, it becomes harder for the slip directions of martensite, that is, the {011} planes, to be arranged in the maximum shear force direction and it becomes difficult for slip deformation to occur with respect to the load in the rolling direction. As a result, strain localizes at specific grains and easily becomes initiation points of fracture. For this reason, it is conceivable that the <111> orientations gathering in the rolling direction is disadvantageous to drawing deformation.

Therefore, to improve the reduction of area in tensile test, it is effective to increase the fraction of the <011> orientations and reduce the fraction of <111> orientations in the rolling direction. Specifically, at the position of 10% of the diameter or thickness from the surface, the ratio of <011> fraction/<111> fraction of the martensite texture observed from the rolling direction has to become 3.0 or more. The ratio of <011> fraction/<111> fraction is preferably 3.8 or more, more preferably 4.4 or more, still more preferably 4.5 or more, even more preferably 4.8 or more. Here, the ratio of <011> fraction/<111> fraction of the martensite texture observed from the rolling direction is the area fraction of the grains having <011> orientations within 5° in all orientations around from the rolling direction as the center axis and grains having <111> orientations within 5° in all orientations around from the rolling direction as the center axis. For evaluation of the fraction of the martensite texture, analysis of the crystal orientations by an SEM-EBSD or analysis of a pole figure by XRD is used. Further, with drawing deformation, the amount of deformation becomes greater the further to the surface layer of the steel, so the ratio of <011> fraction/<111> fraction becoming larger near the surface layer is effective for improvement of the reduction of area in tensile test.

The reduction of area in tensile test is the rate of change of the cross-sectional area due to tensile test and is preferably 45% or more, more preferably 50% or more, still more preferably 55% or more. The reduction of area in tensile test can be calculated by

$$\{(\text{Cross-sectional area of initial material})-(\text{minimum cross-sectional area of tensile}$$

$$\text{break})\}/(\text{Cross-sectional area of initial material})\times100\%.$$

The "cross-sectional area" is the area in the direction perpendicular to the tensile direction.

To evaluate the delayed fracture characteristic, the critical hydrogen content is used. The upper limit of the amount of hydrogen where no fracture occurs is defined as the "critical hydrogen content" wherein the critical hydrogen content is evaluated using a test piece of a shape shown in FIG. 1 simulating concentrated stress at the part of corrosion pits, precharging hydrogen, then running a constant load test by a load of 0.3TS (tensile strength).

The critical hydrogen content is the upper limit of the amount of diffusible hydrogen where no delayed fracture occurs within 100 hours when charging hydrogen into a test piece of a shape shown in FIG. 1 and running a constant load test by a load of 0.3TS (tensile strength). The amount of diffusible hydrogen can be measured by graph of temperature-hydrogen emission relation obtained when heating a steel by a speed of 100°C/hour, as a curve having a peak at a temperature of about 100°C.

The critical hydrogen content is measured to estimate the delayed fracture resistance in a general corrosive environment. The amount of hydrogen in spring steel for suspension in a general corrosive environment is estimated as a maximum 0.20 ppm, so if the critical hydrogen content of the above shape is 0.30 ppm or more, it is judged that delayed fracture in a general corrosive environment can be suppressed. The critical hydrogen content is preferably 0.40 ppm, more preferably 0.50 ppm, still more preferably 0.60 ppm.

Next, the method for producing the spring steel for suspension of the present disclosure will be explained. The spring steel for suspension of the present disclosure is produced starting from a general hot rolled wire rod and subjecting it to hot rolling, quenching, and tempering processes. The material is made a wire rod of predetermined components produced through a general steelmaking process and rolling process. The process of manufacture from the material to the wire rod is not particularly limited. However, the wire size of the material is selected considering the reduction of area in subsequent hot rolling so as to become a predetermined wire size after the subsequent hot rolling, quenching, and tempering. For example, the diameter of the wire rod used as a material is φ 14.0mm when producing a φ 10.0 mm spring steel for suspension after hot rolling by a reduction of area in rolling of 50%.

The "reduction of area in rolling" is the rate of change of the cross-sectional area during the rolling and can be calculated by

$$\{(\text{Cross-sectional area before rolling})-(\text{cross-sectional area after rolling})\}/(\text{Cross-}$$

$$\text{sectional area before rolling})\times100\%.$$

The "cross-sectional area" is the area in the direction perpendicular to the rolling direction.

The wire size of the material and the wire size after hot rolling are not particularly limited, but from the viewpoint of achieving both precision of rolling and an amount of rolling reduction well, the wire rod size of the material is preferably 11.5 mm or more, while the wire size after hot rolling is preferably 8.0 mm or more. From the viewpoint of better securing the hardenability due to cooling after rolling, the wire rod size of the material is preferably 20.0 mm or less and the wire size after the hot rolling is preferably 14.0 mm or less.

To increase the aspect ratio of the prior austenite grains, the steel is rapidly cooled to quench it after hot working, and then is tempered. To increase the aspect ratio of the prior austenite grains and further control the fraction of the martensite structures, a sufficient reduction of area in rolling in hot rolling is necessary. On the other hand, if the reduction of area in rolling becomes too large, the austenite grains recrystallize, so to obtain the structure of the spring steel for suspension of the present disclosure, the control of the temperature and reduction of area in rolling at the time of hot rolling is important.

In the method of the present disclosure, to obtain a large aspect ratio of the prior austenite grains and a large ratio of <011> fraction/<111> fraction, the hot rolling temperature is controlled divided into a less than 1150°C to 950°C temperature region, less than 950°C to 750°C temperature region, and less than 750°C temperature region, but these mean the temperature regions of an integrated multistage hot rolling process.

Hot rolling in the less than 1150°C to 950°C (below, also referred to as "950°C or more") temperature region is effective for making the austenite grains largely deform and enlarging the ratio of <011> fraction/<111> fraction. However, if the reduction of area in rolling in the 950°C or more temperature region is large, recrystallization easily occurs. For this reason, to obtain a large ratio of <011> fraction/<111> fraction, the reduction of area in rolling at 950°C or more is controlled to 15% to less than 30%, preferably 20% to less than 25%.

In the less than 950°C to 750°C (below, also referred to as "950 to 750°C") temperature region, it is hard for recrystallization to occur, so it is possible to increase the cumulative reduction of area in rolling with the reduction of area in rolling at less than 1150°C to 950°C. In particular, by increasing the reduction of area in rolling at 950 to 750°C, it is possible to increase the aspect ratio of the prior austenite grains. By giving a 20% or more reduction of area in rolling in the 950 to 750°C temperature region and giving a 40% or more cumulative reduction of area in rolling from the 950°C or more temperature region, it is possible to make the aspect ratio of the prior austenite grains 1.5 or more. The reduction of area in rolling in the 950 to 750°C temperature region is preferably 25% or more. The cumulative reduction of area in rolling is preferably 45% or more, more preferably 50% or more. From the viewpoint of suppression of the formation of proeutectoid ferrite, the upper limit of the reduction of area in rolling at the 950 to 750°C temperature region is preferably 75% or less.

With hot rolling in the less than 750°C temperature region, even if increasing the reduction of area in rolling, there is little possibility of recrystallization. On the other hand, the temperature drop during hot rolling causes proeutectoid ferrite to easily form. However, hot rolling in this temperature region is not excluded so long as suppressing the formation of proeutectoid ferrite by optimization of the components of the steel and it is possible to achieve a metal microstructure where 90% or more is a martensite structure.

The steel given a 40% or more cumulative reduction of area in the above hot rolling process is quenched quickly after hot rolling, preferably within 3 seconds after final rolling, more preferably within 2 seconds after final rolling, then was tempered. The quenching conditions are not particularly limited so long as conditions enabling 90% or more of the metal microstructure to be made the martensite structure, but for example the surface temperature of the steel is cooled to preferably 5 to 60°C, more preferably 10 to 40°C, for example 30°C, by cooling rate of preferably 5°C/sec or more, more preferably 10°C/sec or more. The temperature of the tempering should be suitably set, but preferably is 350 to 550°C, more preferably 460°C to 510°C.

[EXAMPLES]

The inventors used round bar steel having the components shown in Table 1 and diameters of 11.5 to 20.0 mm, and processed by hot rolling, quenching, and tempering under the condition shown in Table 2, and conducted observation of their microstructures, tensile tests, and delayed fracture tests to evaluate the martensite structure fraction (also called the "martensite fraction", aspect ratio of prior austenite grains, <011>/<111> fraction ratio, tensile strength, reduction of area in tensile test, and critical hydrogen content. In all of the examples, the quenching conditions were cooling by a cooling speed of 50°C/sec or more until the surface temperatures become 30°C. In Table 1 and Table 2, Examples 1 to 19 are working examples while Examples X1 to X11 are comparative examples.

The martensite fraction was calculated from observation of the microstructure by an optical microscope. The L-cross-section of the round bar steel cut parallel to the rolling direction was polished to a mirror finish, then 3% Nital was used to bring out the microstructure and a 400X optical microscope was used to observe the microstructure at three locations of the surface layer part, 1/2 position of the radius, and center part at three fields, for a total of nine fields, and the average martensite fraction was calculated.

The aspect ratio of the prior austenite grains was calculated from observation of the structure by an optical microscope. An L-cross-section similar to the above was polished to a mirror surface, then was etched by a picric acid aqueous solution-based corrosive solution to bring out the prior austenite grains. Micrographs of powers of 400X were taken in five fields at positions of 10% of the diameter from the surface of the steel. From the length in the long axis direction of prior austenite grains and the length in the direction perpendicular to the long axis direction, measured from the photographs by the interception method, as the aspect ratio, the "grain size (length) in long-axis direction"/"grain size (width) in direction perpendicular to long-axis direction" was calculated.

The ratio of <011> fraction/<111> fraction of the martensite texture seen from the rolling direction was calculated by analyzing the above L-cross-section microstructure by an SEM-EBSD (made by JEOL, JSM7001-F, EDAX's OIM). The data measured by the SEM-EBSD was processed using the EBSD analysis software "OIM Analysis" of TLS Solution. The analysis mesh was made 5° and the inversed pole figure was analyzed to calculate the ratio of the <011> ftaction/<111> fraction.

The tensile test was made a round bar tensile test based on JIS Z 2201 and 2241.

The critical hydrogen content was calculated by a delayed fracture test using the hydrogen precharge method. The hydrogen precharge method is the method of charging hydrogen into a test piece by cathode hydrogen charging in an aqueous solution for example containing $NH_4SCN$, sealing in the hydrogen by HCP metal plating by Cd, Zn, etc., then running a delayed fracture test in that state. Using a test piece of the shape of FIG. 1, hydrogen was precharged and a constant load delayed fracture test was run by a load of 0.3 time the tensile strength (0.3TS) to measure the critical hydrogen content of the upper limit of the amount of hydrogen where no delayed fracture occurs within 100 hours.

Table 1 (mass%)

|  | C | Si | Mn | P | S | Cr | Mo | V | Ni | Cu | Al | Ti | Nb | B |
|---|---|---|---|---|---|---|---|---|---|---|---|---|---|---|
| 1 | 0.55 | 1.37 | 0.68 | 0.008 | 0.009 | 0.74 |  |  |  |  | 0.022 |  |  |  |
| 2 | 0.49 | 1.91 | 0.69 | 0.007 | 0.006 | 0.67 |  | 0.25 | 0.51 |  | 0.021 |  |  |  |
| 3 | 0.60 | 2.00 | 0.49 | 0.008 | 0.007 | 0.20 | 0.18 | 0.20 | 0.40 |  | 0.030 |  |  |  |
| 4 | 0.54 | 2.05 | 0.51 | 0.006 | 0.008 | 0.21 |  |  | 0.25 | 0.23 | 0.020 | 0.007 |  | 0.0021 |
| 5 | 0.42 | 2.00 | 1.05 | 0.009 | 0.016 | 0.88 |  | 0.07 |  |  | 0.028 |  |  |  |
| 6 | 0.68 | 0.81 | 0.42 | 0.008 | 0.009 | 0.45 |  |  |  |  | 0.028 |  |  |  |
| 7 | 0.49 | 2.18 | 0.70 | 0.008 | 0.009 | 0.76 |  |  |  |  | 0.029 |  |  |  |
| 8 | 0.48 | 1.80 | 1.42 | 0.007 | 0.016 | 0.74 |  |  |  |  | 0.030 |  |  |  |
| 9 | 0.65 | 2.01 | 0.09 | 0.011 | 0.008 | 0.74 |  | 0.20 |  |  | 0.030 |  |  |  |
| 10 | 0.51 | 1.40 | 0.42 | 0.010 | 0.015 | 0.97 |  |  |  |  | 0.025 |  |  |  |
| 11 | 0.68 | 1.99 | 0.71 | 0.008 | 0.007 | 0.07 |  |  |  |  | 0.025 |  |  |  |
| 12 | 0.64 | 2.01 | 0.32 | 0.012 | 0.013 | 0.15 | 0.48 |  |  |  | 0.020 | 0.048 |  | 0.0020 |
| 13 | 0.55 | 1.81 | 0.41 | 0.008 | 0.009 | 0.70 |  | 0.45 |  |  | 0.030 |  |  |  |
| 14 | 0.62 | 1.41 | 0.32 | 0.009 | 0.009 | 0.22 |  |  | 0.96 | 0.15 | 0.028 |  |  |  |
| 15 | 0.61 | 1.83 | 0.29 | 0.009 | 0.008 | 0.23 |  |  | 0.69 | 0.46 | 0.031 |  |  |  |
| 16 | 0.60 | 2.01 | 0.51 | 0.007 | 0.012 | 0.72 |  |  |  |  | 0.460 |  |  |  |
| 17 | 0.53 | 1.82 | 0.67 | 0.008 | 0.007 | 0.70 |  |  |  |  | 0.025 | 0.185 |  | 0.0025 |
| 18 | 0.55 | 1.41 | 0.71 | 0.008 | 0.009 | 0.74 |  |  |  |  | 0.029 |  | 0.096 |  |
| 19 | 0.53 | 1.40 | 0.51 | 0.010 | 0.009 | 0.71 | 0.12 | 0.25 |  |  | 0.022 | 0.051 |  | 0.0048 |
| 20 | 0.54 | 1.50 | 0.71 | 0.008 | 0.009 | 0.69 |  |  |  |  | 0.001 |  |  |  |
| 21 | 0.55 | 1.37 | 0.68 | 0.006 | 0.005 | 0.72 |  |  |  |  | 0.026 |  |  |  |
| 22 | 0.56 | 1.42 | 0.70 | 0.006 | 0.006 | 0.69 |  |  |  |  | 0.023 |  |  |  |
|  |  |  |  |  |  |  |  |  |  |  |  |  |  |  |
| X1 | 0.56 | 1.99 | 0.60 | 0.008 | 0.009 | 0.70 |  |  |  |  | 0.031 |  |  |  |
| X2 | 0.56 | 1.42 | 0.71 | 0.010 | 0.010 | 0.71 |  |  |  |  | 0.030 |  |  |  |
| X3 | 0.52 | 1.38 | 0.70 | 0.011 | 0.007 | 0.82 |  |  |  |  | 0.031 |  |  |  |

(continued)

|      | C    | Si   | Mn   | P     | S     | Cr   | Mo | V | Ni | Cu | Al    | Ti | Nb | B |
|------|------|------|------|-------|-------|------|----|---|----|----|-------|----|----|---|
| X4   | 0.52 | 1.38 | 0.70 | 0.011 | 0.007 | 0.82 |    |   |    |    | 0.031 |    |    |   |
| X5   | 0.54 | 2.45 | 0.68 | 0.007 | 0.011 | 0.69 |    |   |    |    | 0.027 |    |    |   |
| X6   | 0.35 | 1.37 | 0.68 | 0.007 | 0.010 | 0.89 |    |   |    |    | 0.029 |    |    |   |
| X7   | 0.83 | 1.36 | 0.68 | 0.008 | 0.008 | 0.40 |    |   |    |    | 0.029 |    |    |   |
| X8   | 0.60 | 1.82 | 1.78 | 0.010 | 0.009 | 0.41 |    |   |    |    | 0.025 |    |    |   |
| X9   | 0.54 | 1.42 | 0.25 | 0.009 | 0.009 | 1.42 |    |   |    |    | 0.022 |    |    |   |
| X10  | 0.55 | 1.41 | 0.71 | 0.042 | 0.009 | 0.72 |    |   |    |    | 0.028 |    |    |   |
| X11  | 0.54 | 1.60 | 0.70 | 0.012 | 0.035 | 0.72 |    |   |    |    | 0.028 |    |    |   |
| X12  | 0.52 | 1.38 | 0.70 | 0.011 | 0.007 | 0.82 |    |   |    |    | 0.031 |    |    |   |

Table 2

| | Material wire size (mm) | Reduction of area in rolling from 1150 to 950°C (%) | Reduction of area in rolling from 950 to 750°C (%) | Cumulative reduction of area in rolling (%) | Time between final rolling and quenching (s) | Tempering temp. (°C) | Martensite area fraction (%) | Aspect ratio | $<011>/<111>$ fraction | Tensile strength (MPa) | Reduction of area in tensile test (%) | Critical hydrogen content (ppm) |
|---|---|---|---|---|---|---|---|---|---|---|---|---|
| 1 | 14.0 | 25 | 25 | 50 | 2 | 470 | 95 | 2.1 | 5.2 | 2050 | 50 | 0.48 |
| 2 | 14.0 | 20 | 30 | 50 | 2 | 470 | 94 | 2.5 | 6.3 | 2070 | 48 | 0.52 |
| 3 | 14.0 | 25 | 25 | 50 | 2 | 470 | 93 | 2.4 | 8.3 | 2070 | 48 | 0.60 |
| 4 | 14.0 | 25 | 25 | 50 | 2 | 490 | 95 | 1.9 | 4.4 | 1980 | 55 | 0.58 |
| 5 | 14.0 | 25 | 25 | 50 | 2 | 470 | 94 | 2.0 | 5.2 | 2050 | 52 | 0.42 |
| 6 | 14.0 | 25 | 25 | 50 | 2 | 510 | 92 | 2.0 | 4.9 | 2020 | 53 | 0.35 |
| 7 | 14.0 | 25 | 25 | 50 | 2 | 490 | 93 | 1.9 | 5.5 | 2050 | 46 | 0.41 |
| 8 | 14.0 | 25 | 25 | 50 | 2 | 490 | 94 | 2.0 | 6.0 | 2020 | 55 | 0.36 |
| 9 | 14.0 | 25 | 25 | 50 | 2 | 510 | 96 | 2.3 | 4.8 | 2100 | 49 | 0.42 |
| 10 | 14.0 | 25 | 25 | 50 | 2 | 490 | 94 | 2.2 | 3.8 | 1990 | 57 | 0.42 |
| 11 | 14.0 | 25 | 25 | 50 | 2 | 510 | 95 | 2.0 | 5.1 | 2080 | 52 | 0.44 |
| 12 | 14.0 | 25 | 25 | 50 | 2 | 470 | 95 | 2.3 | 5.1 | 2130 | 48 | 0.51 |
| 13 | 14.0 | 25 | 25 | 50 | 2 | 510 | 95 | 2.1 | 4.8 | 1920 | 60 | 0.86 |
| 14 | 14.0 | 25 | 25 | 50 | 2 | 470 | 92 | 2.1 | 6.4 | 2130 | 51 | 0.77 |
| 15 | 14.0 | 25 | 25 | 50 | 2 | 490 | 96 | 1.9 | 5.5 | 2080 | 46 | 0.57 |
| 16 | 14.0 | 25 | 25 | 50 | 2 | 490 | 92 | 1.9 | 6.2 | 2060 | 51 | 0.36 |
| 17 | 14.0 | 25 | 25 | 50 | 2 | 470 | 96 | 2.0 | 5.1 | 2080 | 47 | 0.46 |
| 18 | 14.0 | 25 | 25 | 50 | 2 | 470 | 96 | 2.5 | 5.8 | 2050 | 53 | 0.55 |
| 19 | 14.0 | 25 | 25 | 50 | 2 | 470 | 95 | 2.2 | 4.5 | 2050 | 58 | 0.62 |
| 20 | 14.0 | 25 | 25 | 50 | 2 | 470 | 96 | 2.3 | 5.5 | 2030 | 47 | 0.48 |
| 21 | 11.5 | 25 | 25 | 50 | 2 | 480 | 92 | 2.2 | 6.1 | 2020 | 45 | 0.51 |
| 22 | 20.0 | 25 | 25 | 50 | 2 | 460 | 96 | 1.9 | 4.5 | 2050 | 52 | 0.39 |

(continued)

|  | Material wire size (mm) | Reduction of area in rolling from 1150 to 950°C (%) | Reduction of area in rolling from 950 to 750°C (%) | Cumulative reduction of area in rolling (%) | Time between final rolling and quenching (s) | Tempering temp. (°C) | Martensite area fraction (%) | Aspect ratio | <011>/ <111> fraction | Tensile strength (MPa) | Reduction of area in tensile test (%) | Critical hydrogen content (ppm) |
|---|---|---|---|---|---|---|---|---|---|---|---|---|
| X1 | 14.0 | 35 | 15 | 50 | 2 | 470 | 95 | 1.2 | 4.6 | 2050 | 42 | 0.12 |
| X2 | 14.0 | 10 | 40 | 50 | 2 | 380 | 88 | 2.4 | 1.7 | 2070 | 36 | 0.42 |
| X3 | 12.0 | 0 | 25 | 25 | 2 | 470 | 96 | 1.8 | 1.2 | 2050 | 35 | 0.38 |
| X4 | 12.0 | 10 | 15 | 25 | 2 | 470 | 95 | 1.2 | 3.3 | 2050 | 35 | 0.15 |
| X5 | 14.0 | 25 | 25 | 50 | 2 | 510 | 92 | 2.1 | 3.3 | 2050 | 24 | 0.48 |
| X6 | 14.0 | 25 | 25 | 50 | 2 | 400 | 98 | 2.0 | 4.7 | 1670 | 56 | 0.54 |
| X7 | 14.0 | 25 | 25 | 50 | 2 | 510 | 92 | 2.0 | 5.0 | 2070 | 28 | 0.44 |
| X8 | 14.0 | 25 | 25 | 50 | 2 | 510 | 91 | 1.9 | 3.6 | 2050 | 30 | 0.40 |
| X9 | 14.0 | 25 | 25 | 50 | 2 | 490 | 92 | 2.0 | 4.9 | 2050 | 31 | 0.34 |
| X10 | 14.0 | 25 | 25 | 50 | 2 | 470 | 95 | 2.2 | 6.2 | 2050 | 25 | 0.18 |
| X11 | 14.0 | 25 | 25 | 50 | 2 | 470 | 95 | 2.3 | 7.1 | 2050 | 28 | 0.24 |
| X12 | 14.0 | 25 | 25 | 50 | 5 | 450 | 85 | 1.3 | 3.8 | 2050 | 44 | 0.22 |

From Table 2, in each of the examples, the aspect ratio of the prior austenite grains was 1.5 or more while the ratio of the <011> ftaction/<111> fraction of the martensite texture as seen from the rolling direction was 3.0 or more. In these examples, the tensile strengths, reduction of area in tensile tests, and critical hydrogen content were realized together at high levels.

In Example X1, the reduction of area in rolling in the 950°C or more temperature range was large and the reduction of area in rolling in the 950°C to 750°C temperature range was small, so the aspect ratio of the prior austenite grains became smaller and the critical hydrogen content also became low.

In Examples X2 and X3, the rates of reduction of area in rolling in the 950°C or more temperature range were small, so the ratios of <011> ftaction/<111> fraction were small and the reduction of area in tensile tests were insufficient.

In Example X4, the rates of reduction of area in rolling in the 950°C or more and 950 to 750°C temperature ranges were small, the aspect ratio of the prior austenite grains was small, and the reduction of area in tensile test and critical hydrogen content were low.

In Example X5 and Examples X7 to X11, the reduction of area in tensile tests were insufficient. In Example X10 and Example X11, the critical hydrogen contents were insufficient. Example X5 was high in Si content, Example X7 was high in C content, Example X8 was high in Mn content, Example X9 was high in Cr content, Example X10 was high in P content, and Example X11 was high in S content.

Example X12 was long in time from final rolling to quenching, fell in martensite fraction, and was insufficient in aspect ratio of prior austenite grains. It is estimated that proeutectoid ferrite nucleated from the worked structure before quenching.

In Example X6, the C content was low and a sufficient tensile strength could not be obtained.

From the above examples, it is learned that the spring steel for suspension of the present disclosure had a high tensile strength and excellent delayed fracture resistance and reduction of area in tensile test.

The spring steel for suspension of the present disclosure does not contain any expensive alloy elements or even if containing them contains it in a trace amount, has a 1800 MPa or more tensile strength, and has an excellent cold formability and delayed fracture resistance, so a suspension spring used in an automobile etc. can be lightened. The effect in industry is extremely remarkable.

**Claims**

1.  Spring steel for suspension containing, by mass%:

    C: 0.40 to 0.70%;
    Si: 0.80 to 2.20%;
    Mn: 0.05 to 1.50%;
    Cr: 0.05 to 1.00%;
    P: limited to 0.020% or less;
    S: limited to 0.020% or less, and

    optionally further containing, by mass%, one or more of:

    Mo: 0.50% or less;
    V: 0.50% or less;
    Ni: 1.00% or less;
    Cu: 0.50% or less; and
    B: 0.0050% or less, and

    optionally, further containing, by mass%, one or more of:

    Al: 0.50% or less;
    Ti: 0.20% or less; and
    Nb: 0.10% or less, and

    a balance of Fe and unavoidable impurities, wherein
    at a cross-section parallel to a rolling direction, 90% or more of the metal microstructures by area fraction is tempered martensite, and
    at a cross-section parallel to the rolling direction, in a range of 10% of diameter or thickness from the surface, a ratio of a length in a long axis direction of prior austenite grains and a length in a direction perpendicular to the long axis direction of the prior austenite grains is 1.5 or more and a ratio of <011> ftaction/<111> fraction of martensite texture as observed from the rolling direction is 3.0 or more.

2. The spring steel for suspension according to claim 1, wherein a tensile strength is 1800 MPa or more, a reduction of area in tensile test is 40% or more, and a critical hydrogen content measured by applying a test load of 30% of the tensile strength to a test piece provided with a 60° annular notch down to a depth of 10% of a rod diameter is 0.30 ppm or more.

3. A method for producing spring steel for suspension according to claim 1 or 2, comprising:

hot rolling a wire rod having steel components described in claim 1 so as to give a 15% or more to less than 30% reduction of area in rolling in a less than 1150°C to 950°C or more temperature region, then give a 20% or more reduction of area in rolling in a less than 950°C to 750°C or more temperature region and a 40% or more cumulative reduction of area in rolling with the reduction of area in rolling in the less than 1150°C to 950°C or more temperature region,
quenching the hot rolled steel wire to transform 90% or more of the metal microstructure by area fraction at a cross-section parallel to the rolling direction to martensite, and
tempering the quenched steel wire,
wherein a time from an end of the hot rolling to a start of the quenching is within 3 seconds.

**Patentansprüche**

1. Federstahl für eine Aufhängung, der in Masse-% enthält:

C: 0,40 bis 0,70%;
Si: 0,80 bis 2,20%;
Mn: 0,05 bis 1,50%;
Cr: 0,05 bis 1,00%;
P: begrenzt auf 0,020% oder weniger;
S: begrenzt auf 0,020% oder weniger, und
der optional ferner in Masse-% eines oder mehreres enthält von:

Mo: 0,50% oder weniger;
V: 0,50% oder weniger;
Ni: 1,00% oder weniger;
Cu: 0,50% oder weniger; und
B: 0,0050% oder weniger, und
der optional ferner in Masse-% eines oder mehreres enthält von:

Al: 0,50% oder weniger;
Ti: 0,20% oder weniger; und
Nb: 0,10% oder weniger, und
einen Rest aus Fe und unvermeidbaren Verunreinigungen, wobei in einem Querschnitt parallel zu einer Walzrichtung 90% oder mehr des Metallmikrogefüges pro Flächenanteil angelassener Martensit ist, und in einem Querschnitt parallel zur Walzrichtung in einem Bereich von 10% des Durchmessers oder der Dicke von der Oberfläche ein Verhältnis einer Länge in einer Längsachsenrichtung von früheren Austenitkörnern und einer Länge in einer Richtung senkrecht zur Längsachsenrichtung der früheren Austenitkörner 1,5 oder mehr und ein Verhältnis des <011>-Anteil/<111>-Anteil der aus der Walzrichtung betrachteten Martensittextur 3,0 oder mehr beträgt.

2. Federstahl für eine Aufhängung nach Anspruch 1, wobei eine Zugfestigkeit 1800 MPa oder mehr, eine Querschnittminderung in einer Zugprüfung 40% oder mehr und ein kritischer Wasserstoffgehalt, der durch Anwenden einer Prüfbelastung von 30% der Zugfestigkeit auf ein Probestück gemessen wird, das mit einer ringförmigen Kerbe von 60° bis zu einer Tiefe von 10% eines Stangendurchmessers versehen ist, 0,30 ppm oder mehr beträgt.

3. Verfahren zum Herstellen von Federstahl für eine Aufhängung nach Anspruch 1 oder 2, das aufweist:

Warmwalzen eines Rundwalzdrahts, der Stahlkomponenten nach Anspruch 1 aufweist, um eine Querschnittminderung von 15% oder mehr bis weniger als 30% beim Walzen in einem Temperaturbereich von weniger als 1150°C bis 950°C oder mehr zu erteilen, dann eine Querschnittminderung von 20% oder mehr beim Walzen in einem Temperaturbereich von weniger als 950°C bis 750°C oder mehr und eine kumulierte Querschnittminderung von 40% oder mehr beim Walzen mit der Querschnittminderung beim Walzen im Temperaturbereich von weniger als 1150°C bis 950°C oder mehr zu erteilen,
Abschrecken des warmgewalzten Stahldrahts, um 90% oder mehr des Metallmikrogefüges pro Flächenanteil in einem Querschnitt parallel zur Walzrichtung in Martensit zu transformieren, und
Anlassen des abgeschreckten Stahldrahts,
wobei eine Zeit von einem Ende des Warmwalzens bis zu einem Beginn des Abschreckens innerhalb von 3 Sekunden liegt.

**Revendications**

1.  Acier à ressort pour suspensions contenant, en pourcentage massique :

    C : de 0,40 à 0,70 % ;
    Si : de 0,80 à 2,20 % ;
    Mn : de 0,05 à 1,50 % ;
    Cr : de 0,05 à 1,00 % ;
    P : limité à une teneur de 0,020 %, ou moins ;
    S : limité à une teneur de 0,020 %, ou moins, et
    contenant en outre facultativement, en pourcentage massique, un ou plusieurs des éléments suivants :

    Mo : 0,50 %, ou moins ;
    V : 0,50 %, ou moins ;
    Ni : 1,00 %, ou moins ;
    Cu : 0,50 %, ou moins ; et
    B : 0,0050 %, ou moins, et
    contenant en outre facultativement, en pourcentage massique, un ou plusieurs des éléments suivants :

    Al : 0,50 %, ou moins ;
    Ti : 0,20 %, ou moins ; et
    Nb : 0,10 %, ou moins, et
    un reste composé de Fe et d'impuretés inévitables, où,
    dans une section transversale parallèle à une direction de laminage, de la martensite revenue est présentée dans 90 % ou plus des microstructures métalliques par fraction surfacique, et
    dans une section transversale parallèle à la direction de laminage, dans une plage de 10 % de diamètre ou d'épaisseur depuis la surface, le rapport entre la longueur dans la direction d'axe longitudinal des grains d'austénite antérieure et la longueur dans la direction perpendiculaire à la direction d'axe longitudinal des grains d'austénite antérieure est d'au moins 1,5, et le rapport fraction <011>/fraction<111> de la texture martensite observée dans la direction de laminage est d'au moins 3,0.

2.  Acier à ressort pour suspensions selon la revendication 1, où la résistance à la traction est d'au moins 1800 MPa, une réduction de surface à l'essai de traction est d'au moins 40 %, et une teneur critique en hydrogène mesurée par application d'une charge d'essai de 30 % de la résistance à la traction sur une pièce d'essai prévue avec une encoche annulaire de 60° à une profondeur de 10 % du diamètre de la barre est d'au moins 0,30 ppm.

3.  Procédé de production d'un acier à ressort pour suspensions selon la revendication 1 ou la revendication 2, comprenant :

    le laminage à chaud d'un fil machine présentant des composants d'acier selon la revendication 1 de manière à obtenir entre 15 % et 30 % de réduction de surface au laminage dans une plage de température comprise de 1150 °C jusqu'à 950 °C, avant d'obtenir au moins 20 % de réduction de surface au laminage dans une plage de température comprise de 950 °C jusqu'à 750 °C, et une réduction de surface d'au moins 40 % au laminage, cumulée avec la réduction de surface au laminage dans la plage de température comprise de 1150 °C jusqu'à 950 °C,

**EP 3 330 399 B1**

la trempe du fil d'acier laminé à chaud pour transformer en martensite au moins 90 % de la microstructure métallique par fraction de surface dans une section transversale parallèle à la direction de laminage, et

le revenu du fil d'acier trempé,

où la durée entre la fin du laminage à chaud et le début de la trempe est de 3 secondes.

FIG. 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9310151 A
- JP 6346146 A
- JP 2002115023 A
- JP 2002097551 A
- JP 2014043612 A
- JP 2005220422 B